# EUROPEAN PATENT APPLICATION

(11) **EP 4 822 043 A1**
(43) Date of publication of application: **14.10.2026**
(21) Application number: 26165670.6
(22) Date of filing: 18.03.2026
(51) Int. Cl.: C22B 7/00, C22B 15/00, C22B 3/00, C22B 26/12, H01M 10/54

(54) **METHOD FOR RECOVERING VALUABLE METALS**

(30) Priority: 09.04.2025 JP 2025064486
(71) Applicant: Prime Planet Energy & Solutions, Inc., Chuo-ku, Tokyo 103-0022 (JP); The University of Tokyo, Bunkyo-ku, Tokyo 113-8654 (JP)
(72) Inventor: SUZUKI, Shinya, Tokyo,, 103-0022 (JP); OUCHI, Takanari, Tokyo, 113-8654 (JP)
(74) Representative: Kuhnen & Wacker Patent- und Rechtsanwaltsbüro PartG mbB

(57) **Abstract**

Provided is a method capable of simply separating Li, Ni, Co, and Cu from an object containing a water-soluble Li compound, Ni, Co, and Cu, and in which the leaching agent is suitable for reuse. The method for recovering valuable metals of the present disclosure includes a Li, Cu leaching step of leaching Li and Cu into a first aqueous phase by ammonia leaching from an object containing a water-soluble Li compound, Ni, Co, and Cu, a separation step of evaporating ammonia from the first aqueous phase to separate Li and Cu, and a Ni, Co leaching step of leaching Ni and Co into a second aqueous phase by ammonia leaching from the solid residue obtained in the Li, Cu leaching step.

## Description

### BACKGROUND OF THE DISCLOSURE

### 1. Field

The present disclosure relates to a method for recovering valuable metals.

### 2. Background

Lithium-ion secondary batteries are widely used in various fields as vehicle driving power sources, portable power sources, and the like. In recent years, from the viewpoint of SDGs, material recycling of used lithium-ion secondary batteries has been progressing. In lithium-ion secondary batteries, various metal elements are used, and for material recycling, technologies for separating metal elements contained in used lithium-ion secondary batteries are being developed.

Representative examples of positive electrode active materials of lithium-ion secondary batteries that have been put to practical use in vehicle-mounted applications include lithium nickel cobalt manganese-based composite oxides (NCM) and lithium nickel cobalt aluminum-based composite oxides (NCA), and these contain Li, Ni, and Co. Therefore, waste of lithium-ion secondary batteries using these positive electrode active materials contains Li, Ni, and Co. On the other hand, as the negative electrode current collector of lithium-ion secondary batteries, copper foil is typically used. Therefore, waste of lithium-ion secondary batteries typically contains Cu.

Regarding techniques for separating metal elements from waste of lithium-ion secondary batteries, for example, Patent Document 1 discloses that Li, Ni, Co, and Cu are separated from waste of lithium-ion secondary batteries by the following method. Pretreatment is performed on waste lithium-ion secondary batteries to obtain battery powder containing Li, Ni, Co, and Cu and aluminum slag, and roasting treatment is performed on the battery powder. Water is added to the roasted battery powder to prepare an aqueous slurry, and Li is leached into the aqueous phase using a metal chloride. After solid-liquid separation, acid leaching is performed on the solid residue to leach Ni, Co, and Cu into the aqueous phase. Aluminum slag is added to the aqueous phase, and a copper reduction reaction is performed to separate copper. Thereafter, the pH of the aqueous phase is adjusted to remove the aluminum slag.

### [Prior Art Documents]

### [Patent Documents]

[Patent Document 1] International Publication No. WO 2023/024599

### SUMMARY

However, the method described in Patent Document 1 includes acid leaching, and there is a problem that the acid becomes contaminated as it is reused. That is, there is a problem that the acid is disadvantageous in reuse of the leaching agent. Further, for the separation of copper, addition of aluminum slag, a copper reduction reaction, and removal of aluminum slag are performed, and there is a problem that the process is complicated.

Therefore, an object of the present disclosure is to provide a method capable of simply separating Li, Ni, Co, and Cu from an object containing a water-soluble Li compound, Ni, Co, and Cu, and in which the leaching agent is suitable for reuse.

The method for recovering valuable metals of the present disclosure includes a Li, Cu leaching step of leaching Li and Cu into a first aqueous phase by ammonia leaching from an object containing a water-soluble Li compound, Ni, Co, and Cu, a separation step of evaporating ammonia from the first aqueous phase to separate Li and Cu, and a Ni, Co leaching step of leaching Ni and Co into a second aqueous phase by ammonia leaching from a solid residue obtained in the Li, Cu leaching step.

According to such a configuration, a method can be provided in which Li, Ni, Co, and Cu can be simply separated from an object containing a water-soluble Li compound, Ni, Co, and Cu, and the leaching agent is suitable for reuse.

### BRIEF DESCRIPTION OF THE DRAWINGS

FIG. 1 is a flowchart showing each step of the method for recovering valuable metals according to the present disclosure;
FIG. 2 is a schematic diagram showing the movement of valuable metals in the method for recovering valuable metals according to the present disclosure;
FIG. 3 is a vertical cross-sectional view schematically showing the internal structure of an example of a lithium-ion secondary battery; and
FIG. 4 is a schematic exploded view showing the configuration of the electrode body of the lithium-ion secondary battery shown in FIG. 3.

### DETAILED DESCRIPTION OF THE PREFERRED EMBODIMENTS

Hereinafter, embodiments according to the present disclosure will be described with reference to the drawings. It should be noted that matters not mentioned in the present specification but necessary for carrying out the present disclosure can be grasped as design matters of a person skilled in the art based on the prior art in the relevant field. The present disclosure can be carried out based on the content disclosed in the present specification and technical common knowledge in the relevant field. In the following drawings, the same reference numerals are assigned to members and portions having the same functions for explanation. Further, dimensional relationships (length, width, thickness, etc.) in each drawing do not reflect actual dimensional relationships. It should be noted that in the present specification, a numerical range expressed as "A to B" includes A and B.

It should be noted that in the present specification, "secondary battery" refers to a power storage device capable of repeated charging and discharging. Further, in the present specification, "lithium-ion secondary battery" refers to a secondary battery that uses lithium ions as charge carriers and achieves charging and discharging by the transfer of charges accompanying lithium ions between positive and negative electrodes.

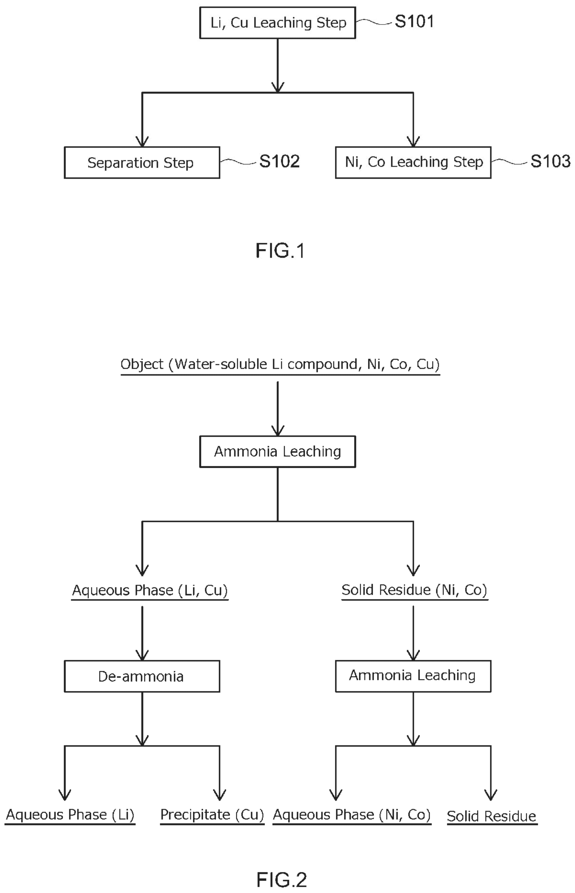

FIG. 1 is a flowchart showing each step of the method for recovering valuable metals according to the present disclosure. FIG. 2 is a schematic diagram showing the movement of valuable metals in the method for recovering valuable metals according to the present disclosure. The method for recovering valuable metals of the present disclosure includes a Li, Cu leaching step S101 of leaching Li and Cu into a first aqueous phase by ammonia leaching from an object containing a water-soluble Li compound, Ni, Co, and Cu, a separation step S102 of evaporating ammonia from the first aqueous phase to separate Li and Cu, and a Ni, Co leaching step S103 of leaching Ni and Co into a second aqueous phase by ammonia leaching from a solid residue obtained in the Li, Cu leaching step.

The method for recovering valuable metals of the present disclosure is performed on an object containing a water-soluble Li compound, Ni, Co, and Cu. The type of this object is not particularly limited as long as it contains a water-soluble Li compound, Ni, Co, and Cu. The object is typically roasted black mass of waste of lithium-ion secondary batteries. Therefore, first, lithium-ion secondary batteries will be specifically described.

### <Lithium-Ion Secondary Battery>

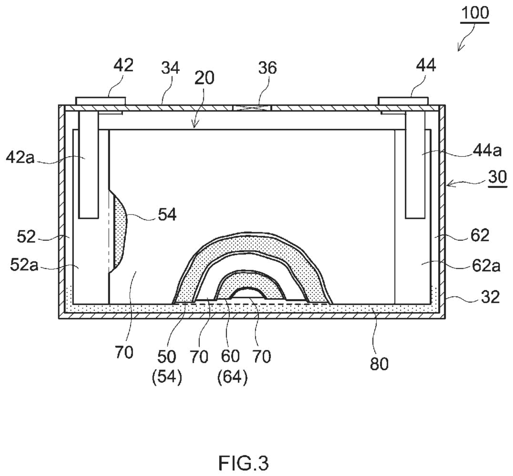

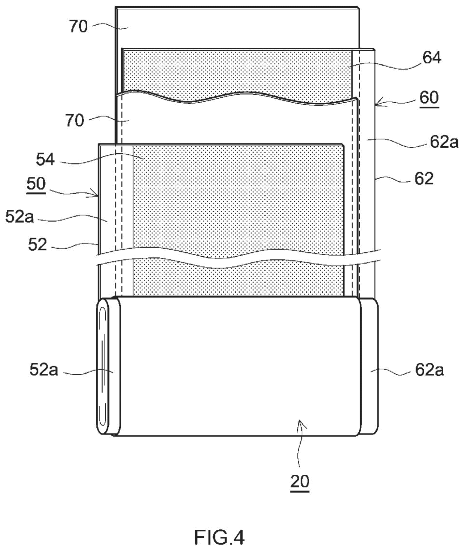

A general configuration of a lithium-ion secondary battery will be described with examples. An example of a general structure of a lithium-ion secondary battery is shown in FIGS. 3 and 4. FIG. 3 is a vertical cross-sectional view schematically showing the internal structure of an example of a lithium-ion secondary battery. FIG. 4 is a schematic exploded view showing the electrode body of the lithium-ion secondary battery shown in FIG. 3. It should be noted that the following description of the lithium-ion secondary battery is for convenience of understanding and does not limit the method for recovering valuable metals of the present disclosure in any way.

As shown in FIG. 3, a lithium-ion secondary battery 100 is a sealed battery in which a flat-shaped electrode body 20 and a non-aqueous electrolyte (not shown) are housed inside a battery case 30. As shown in FIG. 3, the battery case 30 is composed of an exterior body 32 that houses the electrode body 20, and a lid 34 that seals an opening of the exterior body 32. The exterior body 32 and the lid 34 are welded and sealed by laser welding or the like. As the material of the battery case 30, for example, aluminum, aluminum alloy, resin, or the like is used.

In the illustrated example, the battery case 30 has a prismatic shape. However, the shape of the battery case 30 is not limited to this, and may be, for example, a cylindrical shape. Alternatively, the battery case 30 may be a laminate case having a gas barrier layer such as an aluminum layer and a sealant layer containing a thermoplastic resin.

The battery case 30 includes a positive electrode terminal 42 and a negative electrode terminal 44 for external connection. Further, the battery case 30 is provided with a safety valve 36 set to release the internal pressure when the internal pressure of the battery case 30 rises to a predetermined level or higher. The battery case 30 is provided with an injection port (not shown) for injecting the non-aqueous electrolyte. The positive electrode terminal 42 is electrically connected to a positive electrode current collecting plate 42a. The negative electrode terminal 44 is electrically connected to a negative electrode current collecting plate 44a.

As shown in FIGS. 3 and 4, the electrode body 20 has a form in which an elongated positive electrode sheet 50 and an elongated negative electrode sheet 60 are superposed with two elongated separator sheets 70 interposed therebetween and wound in the longitudinal direction. Therefore, in the present embodiment, the electrode body 20 is a wound electrode body. However, the electrode body 20 is not limited to this, and may be a stacked-type electrode body in which a plurality of positive electrodes and a plurality of negative electrodes are alternately stacked with separators interposed therebetween.

As shown in FIG. 3, in the positive electrode sheet 50, a positive electrode active material layer 54 is formed on one side or both sides (here, both sides) of a positive electrode current collector 52 along the longitudinal direction. The positive electrode sheet 50 has a positive electrode active material layer non-formed portion 52a, which is a portion where the positive electrode active material layer 54 is not formed and the positive electrode current collector 52 is exposed. The positive electrode current collecting plate 42a is joined to the positive electrode active material layer non-formed portion 52a.

An example of the positive electrode current collector 52 constituting the positive electrode sheet 50 includes aluminum foil and the like. The positive electrode active material layer 54 contains a positive electrode active material. Typically, a lithium transition metal composite oxide containing Ni and Co is used as the positive electrode active material. Examples of the positive electrode active material include lithium nickel cobalt manganese-based composite oxides, lithium nickel cobalt aluminum-based composite oxides, and the like. The positive electrode active material layer 54 may contain a conductive material (e.g., carbon black, carbon nanotube, etc.), a binder (e.g., polyvinylidene fluoride, etc.), and the like.

The content of the positive electrode active material in the positive electrode active material layer 54 is desirably 70% by mass or more, and more desirably 85% by mass or more and 99% by mass or less. The content of the conductive material in the positive electrode active material layer 54 is desirably 0.1% by mass or more and 20% by mass or less, and more desirably 0.3% by mass or more and 15% by mass or less. The content of the binder in the positive electrode active material layer 54 is desirably 0.4% by mass or more and 15% by mass or less, and more desirably 0.5% by mass or more and 10% by mass or less.

In the negative electrode sheet 60, a negative electrode active material layer 64 is formed on one side or both sides (here, both sides) of a negative electrode current collector 62 along the longitudinal direction. The negative electrode sheet 60 has a negative electrode active material layer non-formed portion 62a, which is a portion where the negative electrode active material layer 64 is not formed and the negative electrode current collector 62 is exposed. The negative electrode current collecting plate 44a is joined to the negative electrode active material layer non-formed portion 62a.

The negative electrode current collector 62 constituting the negative electrode sheet 60 is typically copper foil. The negative electrode active material layer 64 contains a negative electrode active material. Examples of the negative electrode active material include carbon-based negative electrode active materials (e.g., graphite, hard carbon, soft carbon, etc.), silicon-based negative electrode active materials (e.g., silicon, silicon oxide, etc.), and the like. The negative electrode active material layer 64 may contain a binder (e.g., styrene butadiene rubber (SBR), etc.), a thickener (e.g., carboxymethyl cellulose (CMC), etc.), and the like.

The content of graphite in the negative electrode active material layer 64 is desirably 90% by mass or more, and more desirably 95% by mass or more and 99% by mass or less. The content of the binder in the negative electrode active material layer 64 is desirably 0.1% by mass or more and 8% by mass or less, and more desirably 0.5% by mass or more and 3% by mass or less. The content of the thickener in the negative electrode active material layer 64 is desirably 0.3% by mass or more and 3% by mass or less, and more desirably 0.5% by mass or more and 2% by mass or less.

Examples of the separator 70 include porous resin sheets such as polyethylene and polypropylene. The porous sheet may have a single-layer structure or a multi-layer structure. A heat resistant layer (HRL) may be provided on the surface of the separator 70.

The non-aqueous electrolyte typically contains a non-aqueous solvent and a supporting salt (in other words, an electrolyte salt). Examples of the non-aqueous solvent include carbonates (e.g., ethylene carbonate, ethyl methyl carbonate, dimethyl carbonate, etc.), esters, ethers, and the like. Examples of the supporting salt include lithium salts such as LiPF₆. The concentration of the supporting salt is not particularly limited, but is desirably 0.7 mol/L to 1.3 mol/L. The non-aqueous electrolyte may contain various additives such as a gas generating agent and a film forming agent. It should be noted that in the present embodiment, a non-aqueous electrolyte is used as the electrolyte, but the electrolyte may be a solid electrolyte.

The lithium-ion secondary battery 100 is used, for example, for vehicle-mounted applications (i.e., for driving power sources of vehicles such as electric vehicles (BEV), hybrid vehicles (HEV), plug-in hybrid vehicles (PHEV)), power source applications for electronic devices, and the like.

As described above, in the positive electrode of a lithium-ion secondary battery, Li, Ni, and Co are typically used as the constituent metal elements of the positive electrode active material. The positive electrode active material may further contain Mn or Al. Al is generally used for the positive electrode current collector. Cu is typically used for the negative electrode current collector. In addition, in the lithium-ion secondary battery, Li is used in the non-aqueous electrolyte. Further, Al may be used for the battery case. Hereinafter, each step of the method for recovering valuable metals of the present disclosure will be described in detail.

### <Li, Cu Leaching Step S101>

In the Li, Cu leaching step S101, ammonia leaching of Li and Cu is performed on an object containing a water-soluble Li compound, Ni, Co, and Cu.

The type of the water-soluble Li compound contained in the object is not particularly limited as long as it is a water-soluble Li compound. Examples of the water-soluble Li compound include Li₂CO₃, LiCl, LiOH, and the like.

As described above, the object containing a water-soluble Li compound, Ni, Co, and Cu is typically roasted black mass of waste of lithium-ion secondary batteries. It should be noted that in the present specification, "waste of lithium-ion secondary batteries" includes not only used lithium-ion secondary batteries but also constituent members of used lithium-ion secondary batteries (e.g., electrode bodies, etc.), defective lithium-ion secondary batteries, and constituent members of defective lithium-ion secondary batteries (e.g., electrode bodies, etc.).

In lithium-ion secondary batteries, Li, Ni, and Co are contained in the form of composite oxides as positive electrode active materials. Further, Li is contained in the form of an electrolyte salt. Cu is contained in the form of metal as a negative electrode current collector. In the roasted black mass of waste of lithium-ion secondary batteries, during the roasting step, Li is mainly converted into a water-soluble Li compound (e.g., Li₂CO₃) through reactions such as carbonation. Therefore, the roasted black mass of waste of lithium-ion secondary batteries contains a water-soluble Li compound, Ni, Co, and Cu.

Further, Ni and Co contained in lithium-ion secondary batteries in a form of oxide can be reduced by roasting. Further, Cu contained in lithium-ion secondary batteries can be oxidized by roasting. Therefore, the roasted black mass of waste of lithium-ion secondary batteries may contain Ni, Co, and Cu in the form of metal or oxide, respectively. Since metal forms of Ni, Co, and Cu each have a higher leaching rate than oxide forms of Ni, Co, and Cu, respectively, it is desirable that the roasted black mass of waste of lithium-ion secondary batteries contains Ni, Co, and Cu in the form of metal, respectively.

The roasted black mass can be obtained, for example, specifically by crushing waste of lithium-ion secondary batteries according to a known method, performing sieving if necessary, performing separation of a specific metal species if necessary, and roasting at 650°C to 1500°C (desirably 750°C to 1000°C) for 1 hour to 24 hours (desirably 4 hours to 12 hours). Here, by adopting an atmosphere with an oxygen concentration of 5 vol% or less (desirably 1 vol% or less) (particularly, under an inert gas atmosphere such as argon gas or nitrogen gas) as the roasting atmosphere, the roasted black mass of waste of lithium-ion secondary batteries can contain Li in the form of a water-soluble Li compound and Ni, Co, and Cu in the form of metal. On the other hand, when the air or an oxygen atmosphere with a higher oxygen concentration than the air is selected as the roasting atmosphere, Li, Ni, Co, and Cu can be contained in the form of oxides in the roasted black mass. Therefore, the object is particularly desirably roasted black mass obtained by roasting waste of lithium-ion secondary batteries in an atmosphere with an oxygen concentration of 5 vol% or less (particularly, under an inert gas atmosphere such as argon gas or nitrogen gas).

The gas that the roasting atmosphere may contain other than oxygen is typically an inert gas such as argon gas or nitrogen gas. However, the roasting atmosphere may contain gases other than oxygen and inert gas. Here, depending on the type of gas contained in the roasting atmosphere, the type of water-soluble Li compound can be changed. Specifically, when the roasting atmosphere is an inert gas atmosphere such as argon gas or nitrogen gas, the roasted black mass contains Li₂CO₃ as a water-soluble Li compound. When the roasting atmosphere contains chlorine gas (e.g., when the atmosphere is a mixed gas atmosphere of chlorine gas and inert gas), the roasted black mass contains LiCl. At this time, the concentration of chlorine gas in the atmosphere is desirably 5 vol% or less so that metals other than Li do not form chlorides. When the roasting atmosphere contains hydrogen gas (e.g., when the atmosphere is a mixed gas atmosphere of hydrogen gas and inert gas), the roasted black mass contains LiOH. When the roasting atmosphere contains hydrogen gas, metal elements such as Ni and Co maintain a metallic state, so the concentration of the hydrogen gas is not particularly limited.

Therefore, the method for recovering valuable metals of the present disclosure may further include, as an optional step, a step of roasting waste of lithium-ion secondary batteries to obtain an object containing a water-soluble Li compound, Ni, Co, and Cu (i.e., roasted black mass) (hereinafter also referred to as "roasting step"). The roasting step is performed before the Li, Cu leaching step S101. The roasting conditions in the roasting step are as described above.

It should be noted that by the above roasting, liquid components (e.g., electrolyte solution, etc.) in the waste of lithium-ion secondary batteries can be removed, and resin components (e.g., binder, separator, etc.) can be carbonized. Further, by roasting, the function as a battery can be stopped.

The object may further contain elements (particularly metal elements) other than the water-soluble Li compound, Ni, Co, and Cu. For example, the object may contain other transition metal elements, and in particular, may further contain Mn. For example, the object may further contain Al.

In the Li, Cu leaching step S101, ammonia leaching is performed on the object, so a first ammonia aqueous solution containing at least water and ammonia is used as a leaching agent.

The concentration of ammonia in the first ammonia aqueous solution is not particularly limited as long as Li and Cu can be leached. From the viewpoint of suppressing dissolution of metals other than Li and Cu, the concentration of ammonia in the first ammonia aqueous solution is desirably 0.01% by mass or more, and more desirably 0.1% by mass or more. Further, the upper limit of the concentration of ammonia is desirably 5% by mass or less, and more desirably 2% by mass or less. From the viewpoint of leaching ability and ease of handling, the concentration of ammonia is particularly desirably 0.1% by mass to 2% by mass.

The first ammonia aqueous solution may contain only water and ammonia. That is, the first ammonia aqueous solution may be ammonia water.

On the other hand, the first ammonia aqueous solution may further contain other components. For example, the first ammonia aqueous solution may further contain ammonium carbonate. The amount of ammonium carbonate in the first ammonia aqueous solution is desirably 0.5 molar times to 1.5 molar times the amount of Cu contained in the object, more desirably 0.8 molar times to 1.2 molar times, and still more desirably equimolar. On the other hand, ammonium carbonate promotes the leaching of Ni and Co. The amount of ammonium carbonate in the first ammonia aqueous solution is desirably 0.20 molar times or less, more desirably 0.10 molar times or less, and still more desirably 0.05 molar times or less of the total amount of Ni and Co contained in the object.

The first ammonia aqueous solution may contain only water, ammonia, and ammonium carbonate. The first ammonia aqueous solution may further contain components other than water, ammonia, and ammonium carbonate within a range (e.g., at a concentration of less than 10% by mass, 5% by mass or less, or 1% by mass or less) that does not impair the effects of the present disclosure.

The amount of the first ammonia aqueous solution used is not particularly limited, and may be about the same as the amount of ammonia aqueous solution used in known ammonia leaching methods. For example, the amount of the first ammonia aqueous solution used is an amount that completely immerses the object.

Usually, oxygen is involved in the dissolution of Cu into ammonia water. As this oxygen, oxygen dissolved in the first ammonia aqueous solution and oxygen in the air can be used. Therefore, the Li, Cu leaching step S101 may be performed in the air, but from the viewpoint of a high dissolution rate, it is desirable to supply oxygen to the first ammonia aqueous solution during leaching. As for the amount of oxygen supplied, it is desirably equimolar or more, and more desirably 1.5 molar times or more with respect to the element to be oxidized contained in the object (i.e., Cu).

The supply of oxygen can be performed according to a known method. For example, the supply of oxygen can be performed by introducing a gas containing oxygen (e.g., oxygen gas, air, etc.) into ammonia water by bubbling or the like. At this time, the smaller the bubbles, the more efficiently the amount of dissolved oxygen can be increased. Alternatively, for example, the supply of oxygen can be performed by sealing a container and introducing oxygen therein while pressurizing.

The Li, Cu leaching step S101 can be performed, for example, as follows. First, a container is prepared. The container may be a known container used for ammonia leaching. If necessary, heating means such as a heater, temperature measuring means such as a thermometer or a temperature sensor, stirring means such as a stirring blade or a magnetic stirrer, and the like are attached to the container. Further, if necessary, a bubbling device is prepared. The bubbling device may be a known one used in leaching. The bubbling device may be attached to the container before charging the object and the first ammonia aqueous solution, or may be attached to the container after charging the object and the first ammonia aqueous solution.

The object and the first ammonia aqueous solution are charged into the container. The order in which these are charged is not particularly limited, and either may be charged first, or they may be charged simultaneously. If necessary, a gas containing oxygen is supplied as bubbles to the first ammonia aqueous solution by the bubbling device.

The Li, Cu leaching step S101 may be performed at room temperature (i.e., 25±10°C) or under heating. The leaching temperature is desirably more than 0°C and 80°C or less, more desirably 10°C or more and 50°C or less, and still more desirably 15°C or more and 35°C or less.

The leaching time can be determined according to the leaching temperature. The lower the leaching temperature, the more desirable it is to select a longer leaching time. The leaching time is, for example, 0.5 hours to 48 hours, desirably 1 hour to 24 hours, and more desirably 1.5 hours to 12 hours.

It is desirable to perform stirring during ammonia leaching. The stirring speed is not particularly limited, but is desirably 200 rpm or more, more desirably 300 rpm or more, and still more desirably 400 rpm or more. The stirring speed may be 2000 rpm or less, 1000 rpm or less, or 800 rpm or less.

Ammonia leaching can be terminated by performing solid-liquid separation such as filtration. By this solid-liquid separation, as shown in FIG. 2, an aqueous phase containing Li and Cu (i.e., a first ammonia aqueous solution containing Li and Cu), and a solid residue containing Ni and Co can be obtained. The Li, Cu leaching step S101 can be carried out as described above.

### <Separation Step S102>

Next, the separation step S 102 will be described. It should be noted that the order of carrying out the separation step S102 and the Ni, Co leaching step S103 is not particularly limited as long as these steps are carried out after the Li, Cu leaching step S101. The separation step S102 may be performed before the Ni, Co leaching step S103, or the Ni, Co leaching step S103 may be performed before the separation step S102. Alternatively, the separation step S102 and the Ni, Co leaching step S103 may be performed in parallel.

In the separation step S102, ammonia is evaporated from the first aqueous phase. When ammonia is evaporated from the first aqueous phase, Cu precipitates as a copper compound. Therefore, Li and Cu can be separated as an aqueous phase containing Li and a solid phase containing Cu.

When ammonia is simply evaporated from the first aqueous phase, the copper compound that precipitates is copper oxide (CuO).

When a hydroxide (e.g., LiOH, NaOH, KOH) is added to the first aqueous phase and then ammonia is evaporated, the copper compound that precipitates is copper hydroxide (Cu(OH)₂). Here, when a hydroxide is added to the first aqueous phase and then ammonia is evaporated, the precipitation rate of Cu becomes high, which is advantageous. As the hydroxide, lithium hydroxide (LiOH) is desirable because it does not contain metal elements that become impurities.

In the separation step S102, it is desirable to recover the evaporated ammonia. Then, it is advantageous in reagent circulation that does not produce waste to reuse the recovered ammonia in at least one of the Li, Cu leaching step S101 and the Ni, Co leaching step S103.

The separation step S102 can be performed according to a known method. Specifically, for example, it can be performed as follows. An open container (i.e., a container that is not sealed and is in an open state to the atmosphere) is prepared. The open container may be a known one. Heating means such as a heater, temperature measuring means such as a thermometer or a temperature sensor, stirring means such as a stirring blade or a magnetic stirrer, and the like are attached to the open container.

When recovering ammonia, an ammonia collection device is prepared. A known ammonia collection device can be used. For example, the ammonia collection device includes a suction hood and an ammonia collection section. The suction hood is installed, for example, above the open container. The ammonia collection section, for example, cools the sucked ammonia gas and recovers it as ammonia water. Alternatively, the ammonia collection section, for example, contains an ammonia collection liquid (e.g., an acid aqueous solution with a pH of less than 7, particularly a sulfuric acid aqueous solution with a pH of less than 7), and is configured so that the gas sucked from the suction hood can pass through the ammonia collection liquid. The ammonia collection device may have an ammonia separation section and an ammonia recovery section. The ammonia separation section is configured to separate ammonia from the collection liquid by distillation, adsorption by an adsorbent, membrane separation, or the like. The ammonia recovery section is a tank or the like connected to the ammonia separation section by piping or the like, and is configured to recover ammonia separated in the ammonia separation section. It should be noted that the configuration of the ammonia collection device is not limited to the above.

The first aqueous phase obtained in the Li, Cu leaching step S 101 is added to the open container. When producing copper hydroxide using a hydroxide, the hydroxide is added to the first aqueous phase and dissolved. Next, the first aqueous phase is heated. Thereby, ammonia can be evaporated from the first aqueous phase. The heating temperature is not particularly limited as long as ammonia evaporates, but is desirably 50°C or more, more desirably 70°C or more, and still more desirably 90°C or more. On the other hand, the heating temperature may be less than the boiling point of water (i.e., 100°C).

The heating time can be appropriately determined according to the heating temperature. The higher the heating time, the shorter the heating time can be. The heating time is, for example, 0.5 hours or more, desirably 1 hour or more, more desirably 2 hours or more, and still more desirably 3 hours or more. The heating time is desirably 24 hours or less, more desirably 12 hours or less, and still more desirably 8 hours or less.

Stirring may be performed during heating. The stirring speed is not particularly limited, but is desirably 200 rpm or more, more desirably 400 rpm or more, and still more desirably 600 rpm or more. The stirring speed may be 2000 rpm or less, 1000 rpm or less, or 800 rpm or less.

When recovering ammonia, the ammonia evaporated by heating is recovered by the ammonia collection device. Specifically, for example, the evaporated ammonia is sucked from the suction hood and captured in the collection liquid of the ammonia collection section.

As shown in FIG. 2, when ammonia is evaporated from the first aqueous phase, Cu precipitates as a copper compound and Li remains in the first aqueous phase. Therefore, Cu and Li can be separated. Furthermore, by performing solid-liquid separation such as filtration, Li and Cu can be recovered separately.

The recovered Li can be used as a raw material for a positive electrode active material according to a known method, and can also be used for other applications. The recovered Cu can be used as a raw material for a negative electrode current collector according to a known method, and can also be used for other applications.

### <Ni, Co Leaching Step S103>

The solid residue obtained in the Li, Cu leaching step S101 described above contains Ni and Co. In the Ni, Co leaching step S103, ammonia leaching is performed on the solid residue obtained in the Li, Cu leaching step S101 to leach Ni and Co contained in the solid residue into the second aqueous phase.

In the Ni, Co leaching step S103, a second ammonia aqueous solution containing water, ammonia (NH₃), and an inorganic ammonium salt as a pH adjuster is used as a leaching agent used for ammonia leaching. Desirably, the inorganic ammonium salt is at least one inorganic ammonium salt selected from the group consisting of ammonium sulfate ((NH₄)₂SO₄) and ammonium carbonate ((NH₄)₂CO₃).

In the second ammonia aqueous solution, the concentration of ammonia is not particularly limited, but the higher the concentration, the higher the leaching ability. Therefore, the concentration of ammonia in the second ammonia aqueous solution is, for example, 1% by mass or more, desirably 5% by mass or more, more desirably 10% by mass or more, and still more desirably 15% by mass or more. Further, the upper limit of the concentration of ammonia is the saturated concentration of ammonia in water, and is therefore about 35% by mass. From the viewpoint of leaching ability and ease of handling, the concentration of ammonia is particularly desirably 15% by mass to 25% by mass.

The inorganic ammonium salt used is a pH adjuster. Here, the pH of the second ammonia aqueous solution at 25°C is desirably 9 to 12, and more desirably 10 to 11. Therefore, the amount of the inorganic ammonium salt in the second ammonia aqueous solution is an amount such that the pH of the second ammonia aqueous solution is, for example, 9 to 12, desirably 10 to 11. The concentration of the inorganic ammonium salt in the second ammonia aqueous solution is desirably 0.5 mol/L or more, more desirably 1 mol/L or more, and still more desirably 1.5 mol/L or more. On the other hand, the concentration of the inorganic ammonium salt in the second ammonia aqueous solution may be 3 mol/L or less or 2.5 mol/L or less.

The second ammonia aqueous solution may contain only water, ammonia, and an inorganic ammonium salt. The second ammonia aqueous solution may further contain components other than water, ammonia, and an inorganic ammonium salt within a range (e.g., at a concentration of less than 10% by mass, 5% by mass or less, or 1% by mass or less) that does not impair the effects of the present disclosure.

The amount of the second ammonia aqueous solution used is not particularly limited, and may be about the same as the amount of ammonia aqueous solution used in known ammonia leaching methods. For example, the amount of the second ammonia aqueous solution used is an amount that completely immerses the solid residue.

In the Ni, Co leaching step S103, it is advantageous to perform leaching while supplying a gas containing oxygen to the second ammonia aqueous solution. In this case, the selectivity and leaching rate of Ni and Co can be increased.

The higher the oxygen concentration of the supplied gas, the higher the leaching rate and selectivity of Ni and Co. Therefore, the oxygen concentration of the supplied gas is desirably 21 vol% or more, more desirably 30 vol% or more, still more desirably 50 vol% or more, particularly desirably 90 vol% or more, and most desirably 99 vol% or more.

The oxygen concentration of the supplied gas can be adjusted according to a known method. For example, the oxygen concentration can be adjusted by mixing oxygen gas and an inert gas (e.g., nitrogen gas, argon gas, etc.) so as to obtain a predetermined oxygen concentration. Further, when only oxygen gas is used as the supplied gas, that is, when the supplied gas contains only oxygen gas, the oxygen concentration can be made 99 vol% or more (particularly 100 vol%). Further, since the oxygen concentration in the air is 21 vol%, the air may be used as the gas containing oxygen.

The supply of the gas containing oxygen to the second ammonia aqueous solution can be performed according to a known method. For example, it can be performed by supplying a gas containing oxygen to the second ammonia aqueous solution by bubbling. Here, when only oxygen gas is supplied to the second ammonia aqueous solution by bubbling, the leaching rate and selectivity of Ni and Co become extremely high. At this time, the smaller the bubbles, the more efficiently the amount of dissolved oxygen can be increased. Alternatively, for example, the supply of a gas containing oxygen can be performed by sealing a container and supplying a gas containing oxygen therein while pressurizing.

The Ni, Co leaching step S103 can be performed, for example, as follows. First, a container is prepared. The container may be a known container used for ammonia leaching. If necessary, heating means such as a heater, temperature measuring means such as a thermometer or a temperature sensor, stirring means such as a stirring blade or a magnetic stirrer, and the like are attached to the container. Further, if necessary, a bubbling device is prepared. The bubbling device may be a known one used in leaching. The bubbling device may be attached to the container before charging the solid residue and the second ammonia aqueous solution, or may be attached to the container after charging the solid residue and the second ammonia aqueous solution.

The solid residue and the second ammonia aqueous solution are charged into the container. The order in which these are charged is not particularly limited, and either may be charged first, or they may be charged simultaneously. If necessary, a gas containing oxygen is supplied as bubbles to the second ammonia aqueous solution by the bubbling device.

The amount of the gas containing oxygen supplied can be appropriately determined according to the amounts of the solid residue and the second ammonia aqueous solution. Regarding the amount of gas supplied, the amount of oxygen supplied is desirably equimolar or more, more desirably 2 molar times or more, and still more desirably 3 molar times or more with respect to the element that may be oxidized contained in the solid residue (particularly, Ni and Co). The amount of oxygen supplied may be 100 molar times or less with respect to the element that may be oxidized contained in the solid residue.

The Ni, Co leaching step S103 may be performed at room temperature (i.e., 25±10°C) or under heating. The leaching temperature is desirably more than 0°C and 80°C or less, more desirably 10°C or more and 50°C or less, and still more desirably 15°C or more and 35°C or less.

The leaching time can be appropriately determined according to the leaching temperature and other leaching conditions. The higher the leaching temperature, the shorter the time required to complete leaching. Therefore, when the leaching temperature is 80°C or more, the Ni, Co leaching step S103 is desirably performed for 2 hours or more (more desirably 6 hours or more, particularly desirably 10 hours or more). Alternatively, when the leaching temperature is 70°C or more, it is desirably performed for 4 hours or more (more desirably 9 hours or more). Alternatively, when the leaching temperature is 60°C or more, the Ni, Co leaching step S103 is desirably performed for 6 hours or more (more desirably 12 hours or more). The leaching time of the Ni, Co leaching step S103 may be 24 hours or less or 48 hours or less at any temperature.

It is desirable to perform stirring during leaching. The stirring speed is not particularly limited, but is desirably 200 rpm or more, more desirably 300 rpm or more, and still more desirably 400 rpm or more. The stirring speed may be 2000 rpm or less, 1000 rpm or less, or 800 rpm or less.

As described above, Ni and Co can be leached into the second aqueous phase (i.e., the second ammonia aqueous solution). That is, the Ni, Co leaching step S103 can be performed. Ammonia leaching can be terminated by performing solid-liquid separation such as filtration. As shown in FIG. 2, by this solid-liquid separation, a second aqueous phase into which Ni and Co have been leached (i.e., a second ammonia aqueous solution into which Ni and Co have been leached), and a solid residue can be obtained.

Ni and Co extracted into the second aqueous phase can be recovered according to a known method. The recovered Ni and Co can be used as a raw material for a positive electrode active material according to a known method, and can also be used for other applications. For example, it is advantageous to recover Ni and Co by evaporating ammonia from the second aqueous phase and converting them to nickel carbonate and cobalt carbonate. Alternatively, they can be recovered by converting them to nickel sulfate and cobalt sulfate by adding sulfuric acid to the aqueous phase, or the like. At this time, when the evaporated ammonia is recovered, it can be reused in at least one of the Li, Cu leaching step S 101 and the Ni, Co leaching step S103, which is advantageous.

According to the method for recovering valuable metals of the present disclosure, Ni and Co, and Li and Cu can be recovered at a high recovery rate from an object containing a water-soluble Li compound, Ni, Co, and Cu (particularly, roasted black mass of waste of lithium-ion secondary batteries). Further, in the method for recovering valuable metals of the present disclosure, ammonia, which is a component of the leaching agent when extracting Li and Cu, can be recovered and used repeatedly, and therefore the leaching agent is suitable for reuse. Further, the method for recovering valuable metals of the present disclosure can be carried out in a simple manner. Further, the method for recovering valuable metals of the present disclosure can be used as a method for reproducing materials for a positive electrode. Therefore, the method for recovering valuable metals of the present disclosure is extremely useful in material recycling of lithium-ion secondary batteries.

Hereinafter, test examples relating to the present disclosure will be described in detail, but it is not intended to limit the present disclosure to those shown in such test examples.

### [Preparation of Leaching Object]

First, a roasted black mass of a leaching object was prepared by the following procedure. A positive electrode having a positive electrode active material layer containing a lithium nickel cobalt manganese composite oxide (LiNi_{0.6}Co_{0.2}Mn_{0.2}O₂) on aluminum (Al) foil was crushed. The crushed product of the positive electrode was passed through a sieve with an opening of 500 µm to produce a positive electrode powder. Further, a negative electrode having a negative electrode active material layer containing graphite on copper foil was crushed. The crushed product of the negative electrode was passed through a sieve with an opening of 500 µm to produce a negative electrode powder. The obtained positive electrode powder and negative electrode powder were mixed to obtain a black mass. The black mass was roasted at 750°C for 6 hours under a low oxygen atmosphere to obtain a roasted black mass in which most of the metals were reduced. This roasted black mass contained Li as Li₂CO₃, and Ni, Co, and Cu as metal. 1 g of this roasted black mass was dissolved in an acid, and high-frequency inductively coupled plasma (ICP) emission spectroscopic analysis was performed on the resulting solution. From the analysis results, the amounts of Li, Ni, Co, and Cu in the roasted black mass were determined.

### [Li, Cu Leaching Examination]

### [Test Example 1]

The roasted black mass was charged into a sufficient amount of water. Water leaching was performed at room temperature (25°C) for 3 hours under stirring at 800 rpm while supplying oxygen gas to the water by bubbling. Thereafter, solid-liquid separation was performed by filtration to obtain a leachate and a solid residue.

### [Test Example 2]

The roasted black mass was charged into 0.5 mol/L (about 0.9% by mass) ammonia water. Ammonia leaching was performed at room temperature (25°C) for 3 hours under stirring at 800 rpm while supplying oxygen gas to the ammonia water by bubbling. Thereafter, solid-liquid separation was performed by filtration to obtain a leachate and a solid residue.

### [Test Example 3]

An ammonia aqueous solution was obtained by dissolving ammonium carbonate in an equimolar amount to Cu contained in the roasted black mass into 0.5 mol/L (about 0.9% by mass) ammonia water. It should be noted that the amount of ammonium carbonate was 0.05 molar times the total amount of Ni and Co contained in the roasted black mass. The roasted black mass was charged into this ammonia aqueous solution. Ammonia leaching was performed at room temperature (25°C) for 3 hours under stirring at 800 rpm while supplying oxygen gas to the ammonia aqueous solution by bubbling. Thereafter, solid-liquid separation was performed by filtration to obtain a leachate and a solid residue.

### [Evaluation of Leaching Rate]

ICP emission spectroscopic analysis was performed on the leachates obtained in Test Examples 1 to 3, and the amounts of Li, Ni, Co, and Cu in the leachates were determined. Using the determined values and the values of the initial amounts in the roasted black mass described above, the leaching rates (%) of Li, Ni, Co, and Cu were determined. The average of the Ni leaching rate (%) and the Co leaching rate (%) was taken as the "Ni, Co loss rate (%)". The results are shown in Table 1.

### [Table 1]

**Table 1**

| | Ammonia concentration (mol/L) | Ammonium carbonate amount (molar ratio to Cu) | Ni, Co loss rate (%) | Li leaching rate (%) | Cu leaching rate (%) |
|---|---|---|---|---|---|
| Test Example 1 | 0 | 0 | 0 | 100 | 0 |
| Test Example 2 | 0.5 | 0 | 1 | 100 | 80 |
| Test Example 3 | 0.5 | 1 | 2 | 100 | 95 |

### [Li, Cu Separation Examination]

### [Test Example 4]

The leachate obtained in Test Example 3 was heated to 80°C and stirred at 800 rpm for 6 hours while maintaining the temperature at 80°C. Thereby, ammonia was evaporated. Thereafter, solid-liquid separation was performed by filtration to obtain an aqueous phase and a solid residue.

### [Test Example 5]

Lithium hydroxide (LiOH) in a molar amount greater than Li contained in the leachate obtained in Test Example 3 was dissolved in the leachate obtained in Test Example 3. This was heated to 80°C and stirred at 800 rpm for 6 hours while maintaining the temperature at 80°C. Thereby, ammonia was evaporated. Thereafter, solid-liquid separation was performed by filtration to obtain an aqueous phase and a solid residue.

### [Evaluation of Li, Cu Recovery Rates]

ICP emission spectroscopic analysis was performed on the aqueous phases obtained in Test Examples 4 and 5, and the amounts of Li and Cu in the aqueous phases were determined. Using the determined values and the values of the initial amounts of Li and Cu in the roasted black mass described above, the residual proportion (%) of Li and the residual proportion (%) of Cu in the aqueous phase were determined. The residual proportion (%) of Li was taken as the Li recovery rate (%), and the value obtained by subtracting the residual proportion (%) of Cu from 100% was taken as the Cu recovery rate (%). The results are shown in Table 2.

### [Table 2]

**Table 2**

| | LiOH addition | Li recovery rate (%) | Cu recovery rate (%) |
|---|---|---|---|
| Test Example 4 | None | 100 | 94 |
| Test Example 5 | Present | 100 | 99 |

### [Ni, Co Leaching Examination]

### [Test Example 6]

An ammonia aqueous solution was obtained by dissolving ammonium carbonate in 1.5 molar times the total of Ni and Co contained in the solid residue obtained in Test Example 3 in 13 mol/L (about 24.3% by mass) ammonia water. The solid residue obtained in Test Example 3 was charged into this ammonia aqueous solution. Ammonia leaching was performed at room temperature (25°C) for 3 hours under stirring at 800 rpm while supplying oxygen gas to the ammonia aqueous solution by bubbling. Thereafter, solid-liquid separation was performed by filtration to obtain a leachate and a solid residue.

### [Test Example 7]

The same operation as Test Example 6 was performed except that the amount of ammonium carbonate used was changed from 1.5 molar times to 2.0 molar times to obtain a leachate and a solid residue.

### [Test Example 8]

The same operation as Test Example 6 was performed except that the amount of ammonium carbonate used was changed from 1.5 molar times to 2.5 molar times to obtain a leachate and a solid residue.

### [Evaluation of Ni, Co Recovery Rates]

ICP emission spectroscopic analysis was performed on the leachates obtained in Test Examples 6 to 8, and the amounts of Ni and Co in the leachates were determined. Using the determined values and the values of the initial amounts of Ni and Co in the roasted black mass described above, the Ni leaching rate (%) and the Co leaching rate (%) in the aqueous phase were determined, and the average of the Ni leaching rate (%) and the Co leaching rate (%) was taken as the "Ni, Co recovery rate (%)". The results are shown in Table 3.

### [Table 3]

**Table 3**

| | Ammonium carbonate amount (molar ratio to total of Ni and Co) | Ni, Co recovery rate (%) |
|---|---|---|
| Test Example 6 | 1.5 | 95 |
| Test Example 7 | 2 | 99 |
| Test Example 8 | 2.5 | 99 |

From the results in Table 1, it can be seen that according to the Li, Cu leaching step of the method for recovering valuable metals of the present disclosure, Li and Cu can be separated from an object containing a water-soluble Li compound, Ni, Co, and Cu. Further, from the results in Table 2, it can be seen that according to the separation step of the method for recovering valuable metals of the present disclosure, Li and Cu can be separated from an aqueous phase containing Li and Cu. Furthermore, from the results in Table 3, it can be seen that according to the Ni, Co leaching step of the method for recovering valuable metals of the present disclosure, Ni and Co can be separated.

Further, as shown by the content of the above test examples, it can be seen that according to the method for recovering valuable metals of the present disclosure, Li, Ni, Co, and Cu can be simply separated from an object containing a water-soluble Li compound, Ni, Co, and Cu. Further, in the method for recovering valuable metals of the present disclosure, ammonia in the leaching agent when separating Li and Cu is suitable for reuse.

Although specific examples of the present disclosure have been described in detail above, these are merely examples and do not limit the scope of claims. The technology described in the scope of claims includes various modifications and changes of the specific examples illustrated above.

That is, the method for recovering valuable metals of the present disclosure is the following items [1] to [10].
[1] A method for recovering valuable metals, including: a Li, Cu leaching step of leaching Li and Cu into a first aqueous phase by ammonia leaching from an object containing a water-soluble Li compound, Ni, Co, and Cu,
   a separation step of evaporating ammonia from the first aqueous phase to separate Li and Cu, and
   a Ni, Co leaching step of leaching Ni and Co into a second aqueous phase by ammonia leaching from a solid residue obtained in the Li, Cu leaching step.
[2] The method according to item [1], wherein in the separation step, the evaporated ammonia is recovered,
   and the recovered ammonia is reused in at least one of the Li, Cu leaching step and the Ni, Co leaching step.
[3] The method according to item [1] or [2], wherein the ammonia leaching in the Li, Cu leaching step is performed using a first ammonia aqueous solution containing water and ammonia.
[4] The method according to item [3], wherein the first ammonia aqueous solution further contains ammonium carbonate,
   and the amount of ammonium carbonate in the first ammonia aqueous solution is 0.5 molar times to 1.5 molar times the amount of Cu contained in the object.
[5] The method according to item [3], wherein the ammonia leaching in the Li, Cu leaching step is performed while supplying a gas containing oxygen to the first ammonia aqueous solution.
[6] The method according to any one of items [1] to [5], wherein in the separation step, lithium hydroxide is added to the first aqueous phase, and then ammonia is evaporated.
[7] The method according to any one of items [1] to [6], wherein the ammonia leaching in the Ni, Co leaching step is performed using a second ammonia aqueous solution containing water, ammonia, and at least one inorganic ammonium salt selected from the group consisting of ammonium sulfate and ammonium carbonate.
[8] The method according to item [7], wherein the ammonia leaching in the Ni, Co leaching step is performed while supplying a gas containing oxygen to the second ammonia aqueous solution.
[9] The method according to any one of items [1] to [8], wherein Ni, Co, and Cu are contained in the object in the form of metal.
[10] The method according to any one of items [1] to [9], wherein the object is roasted black mass of waste of lithium-ion secondary batteries.

## Claims

1. A method for recovering valuable metals, comprising: a Li, Cu leaching step (S101) of leaching Li and Cu into a first aqueous phase by ammonia leaching from an object containing a water-soluble Li compound, Ni, Co, and Cu,
a separation step (S102) of evaporating ammonia from the first aqueous phase to separate Li and Cu, and
a Ni, Co leaching step (S103) of leaching Ni and Co into a second aqueous phase by ammonia leaching from a solid residue obtained in the Li, Cu leaching step (S101).

2. The method according to claim 1, wherein in the separation step (S102), the evaporated ammonia is recovered, and
the recovered ammonia is reused in at least one of the Li, Cu leaching step (S101) and the Ni, Co leaching step (S103).

3. The method according to claim 1, wherein the ammonia leaching in the Li, Cu leaching step (S101) is performed using a first ammonia aqueous solution containing water and ammonia.

4. The method according to claim 3, wherein the first ammonia aqueous solution further contains ammonium carbonate, and
the amount of ammonium carbonate in the first ammonia aqueous solution is 0.5 molar times to 1.5 molar times the amount of Cu contained in the object.

5. The method according to claim 3, wherein the ammonia leaching in the Li, Cu leaching step (S101) is performed while supplying a gas containing oxygen to the first ammonia aqueous solution.

6. The method according to claim 1, wherein in the separation step (S102), lithium hydroxide is added to the first aqueous phase, and then ammonia is evaporated.

7. The method according to claim 1, wherein the ammonia leaching in the Ni, Co leaching step (S103) is performed using a second ammonia aqueous solution containing water, ammonia, and at least one inorganic ammonium salt selected from the group consisting of ammonium sulfate and ammonium carbonate.

8. The method according to claim 7, wherein the ammonia leaching in the Ni, Co leaching step (S103) is performed while supplying a gas containing oxygen to the second ammonia aqueous solution.

9. The method according to claim 1, wherein Ni, Co, and Cu are contained in the object in the form of metal.

10. The method according to claim 1, wherein the object is roasted black mass of waste of lithium-ion secondary batteries (100).
